# EUROPEAN PATENT APPLICATION

(11) **EP 4 852 183 A1**
(43) Date of publication of application: **09.12.2026**
(21) Application number: 25748028.5
(22) Date of filing: 27.01.2025
(51) Int. Cl.: H01M 50/293, H01M 50/186

(54) **BATTERY ASSEMBLY AND ELECTRIC DEVICE**

(30) Priority: 02.02.2024 CN 202410157479
(71) Applicant: Dongguan NVT Technology Limited, Donguan, Guangdong 523000 (CN)
(72) Inventor: CHEN, Yuansheng, Dongguan City, Guangdong Province 523808 (CN); TIAN, Tian, Dongguan City, Guangdong Province 523808 (CN); ZHONG, Yibin, Dongguan City, Guangdong Province 523808 (CN); LIU, Leifeng, Dongguan City, Guangdong Province 523808 (CN)
(74) Representative: Icosa
(86) International application number: PCT/CN2025/075592
(87) International publication number: WO 2025/162466

(57) **Abstract**

A battery assembly and an electric device are provided. The battery assembly includes a battery and an adhesive member. The battery includes a packaging bag and an electrode tab. The packaging bag includes a top wall and a first side wall. The packaging bag includes a first sealing portion. The first sealing portion is connected to the top wall, and the electrode tab extends out from the first sealing portion. The adhesive member includes a first adhesive layer, a second adhesive layer, and a conductive layer. The first adhesive layer is connected to the first side wall. The second adhesive layer is configured to be connected to an external battery compartment. One side of the conductive layer is connected to the first adhesive layer, and at least a part of another side of the conductive layer is connected to the second adhesive layer. The conductive layer includes a first body and a first extension segment connected to the first body. The first body is connected to the first side wall. The first extension segment extends to a second side wall or a side of the first sealing portion facing away from the first side wall. The second adhesive layer is configured such that an adhesiveness of the second adhesive layer is reduced or lost when a current is conducted between the conductive layer and the external battery compartment. The battery assembly can reduce the risk of damaging the battery and improve space utilization.

## Description

### TECHNICAL FIELD

The present application relates to the field of energy storage technologies, and in particular, to a battery assembly and an electric device.

### BACKGROUND

Currently, battery packs are widely used in various electronic devices such as mobile phones and tablets. A battery is typically installed in a battery compartment. Currently, the battery is secured in the battery compartment by means such as double-sided adhesive tape or easy-tear stickers. This is not conducive to removing the battery from the battery compartment, tends to easily damage the battery, reduces battery life, and poses safety risks.

### SUMMARY

In view of this, it is necessary to provide a battery assembly and an electric device for facilitating removal of the battery from the battery compartment.

Embodiments of the present application provide a battery assembly including a battery and an adhesive member. The adhesive member is configured to adhere the battery to an external battery compartment. The battery includes a packaging bag and an electrode tab. The packaging bag includes a top wall, a bottom wall, a first side wall, and a second side wall. The top wall and the bottom wall are arranged along a first direction. The first side wall and the second side wall are arranged along a second direction. The first side wall is connected to the top wall and the bottom wall. The second side wall is connected to the top wall and the bottom wall. The packaging bag includes a first sealing portion. The first sealing portion is connected to the top wall, and the electrode tab extends out from the first sealing portion. The first direction is perpendicular to the second direction, and the second direction is a thickness direction of the battery. The adhesive member includes a first adhesive layer, a second adhesive layer, and a conductive layer. The first adhesive layer is connected to the first side wall. The second adhesive layer is configured to be connected to the external battery compartment. One side of the conductive layer is connected to the first adhesive layer, and at least a part of another side of the conductive layer is connected to the second adhesive layer. The conductive layer includes a first body and a first extension segment connected to the first body. The first body is connected to the first side wall. The first extension segment extends to the second side wall or a side of the first sealing portion facing away from the first side wall. The second adhesive layer is configured such that an adhesiveness of the second adhesive layer is reduced or lost when a current is conducted between the conductive layer and the external battery compartment. By configuring the second adhesive layer such that an adhesiveness of the second adhesive layer is reduced or lost when a current is conducted between the conductive layer and the battery compartment, removal of the battery from the battery compartment is facilitated, reducing the risk of battery damage. Extending part of the first extension segment to a side of the first sealing portion facing away from the first side wall can reduce the space occupied by the first extension segment in the second direction, thereby improving space utilization.

In one or more of the above optional implementations, along the second direction, a projection of the first body is within a projection range of the first side wall. The first extension segment includes a first section, a second section, and a third section connected in sequence. The first section is connected to the first body. The first section is located on a side of the first sealing portion toward the first side wall. The second section is located on a side of the first sealing portion facing away from the top wall. The third section is located on a side of the first sealing portion facing away from the first side wall, and at least a part of the third section is exposed from the battery. Along the first direction, projections of the first section, the second section, and the third section are all located within a projection range of the top wall, facilitating reduction of the thickness space occupied by the first extension segment, so that the first extension segment does not exceed the first side wall and the second side wall, facilitating reduction of the thickness of the battery assembly.

In one or more of the above optional implementations, the first adhesive layer includes a second body and a second extension segment connected to the second body. One side of the second body is connected to the first body, and another side of the second body is connected to the first side wall. One side of the second extension segment is connected to the first extension segment, and another side of the second extension segment is connected to the first sealing portion. Along the second direction, a projection of the first body, a projection of the second body, and a projection of the second adhesive layer are all located within a projection range of the first side wall, thereby increasing the area of the first adhesive layer connected to the battery, improving the connection strength between the first adhesive layer and the battery, and reducing the space occupied in the second direction.

In one or more of the above optional implementations, the adhesive member further includes an insulating layer. The insulating layer covers a side of the first section facing away from the second extension segment and a side of the second section facing away from the second extension segment. At least a part of a side of the third section 212c facing away from the second extension segment is exposed through the insulating layer. Along the second direction, a projection of the insulating layer overlaps with a projection of the second adhesive layer. Due to fitting tolerances, gaps are likely to form between the insulating layer and the second adhesive layer. The conductive layer in the gaps is prone to short-circuit with the battery compartment. By arranging the insulating layer and the second adhesive layer to partially overlap, the formation of gaps can be reduced, further reducing the risk of short circuit caused by contact between the conductive layer and the battery compartment.

In one or more of the above optional implementations, when along the second direction, a width L1 of an overlapping region of the insulating layer and the second adhesive layer satisfies 0 < L1 < 2 mm, insulation can be achieved, and the thickness space occupied by the overlapping region can be reduced.

In one or more of the above optional implementations, the second adhesive layer includes a third body. One side of the third body is connected to the first body, and another side of the third body is configured to be connected to the battery compartment. Along the second direction, the projection of the first body, a projection of the second body and a projection of the third body are all located within a projection range of the first side wall, and a projection of the insulating layer overlaps with the projection of the third body.

In one or more of the above optional implementations, the second adhesive layer includes a third body and a third extension segment. One side of the third body is connected to the first body, and another side of the third body is configured to be connected to the battery compartment. Along the second direction, a projection of the first body, a projection of the second body, and a projection of the third body are all located within a projection range of the first side wall. The third extension segment includes a fourth section, a fifth section, and a sixth section connected in sequence. The fourth section is connected to the third body. A side of the fourth section is connected to the first section, a side of the fifth section is connected to the second section, and a side of the sixth section is connected to the third section. The third section is at least partially exposed from the sixth section. The insulating layer covers a side of the fourth section facing away from the first extension segment, a side of the fifth section facing away from the first extension segment, and a side of the sixth section facing away from the first extension segment. Due to a gap between the first sealing portion and the inner wall of the battery compartment, impurities such as dust and debris are likely to be adsorbed onto the second adhesive layer. By covering the third extension segment with the insulating layer, the adsorption of impurities such as dust and debris onto the second adhesive layer can be reduced.

In one or more of the above optional implementations, the battery further includes a first protective layer. The first protective layer is connected to the first side wall, the first sealing portion, and the second side wall. The electrode tab and at least a part of the first sealing portion are located within the first protective layer. The first adhesive layer is connected to the first protective layer. Along the second direction, a projection of the insulating layer on the first side wall is separated from a projection of the first protective layer on the first side wall, thereby reducing the overlap between the insulating layer and the first protective layer, reducing the occupied thickness space, and facilitating reduction of the thickness of the battery.

In one or more of the above optional implementations, the battery includes an electrode assembly and an adapter, both disposed in the packaging bag. The adapter is connected to the electrode assembly and the electrode tab. Along the second direction, a projection of the insulating layer is separated from a projection of the adapter, thereby reducing the overlap between the insulating layer and the adapter, reducing the occupied thickness space, and facilitating reduction of the thickness of the battery.

In one or more of the above optional implementations, the conductive layer includes a substrate layer and a conductive sublayer. The substrate layer is connected to the first adhesive layer, and the conductive sublayer is connected to a side of the substrate layer facing away from the first adhesive layer.

In one or more of the above optional implementations, the battery assembly includes two adhesive members. When viewed along the second direction, the two adhesive members are spaced apart in a third direction, and the first direction, the second direction, and the third direction are mutually perpendicular.

In one or more of the above optional implementations, the adhesive member includes a first connecting segment. The first connecting segment extends to the second side wall or a side of the first sealing portion facing away from the first side wall. The first connecting segment is provided with an exposure opening, and the conductive layer is exposed at the exposure opening. A positive electrode of an external circuit is connected to the conductive layer through the exposure opening, and a negative electrode is connected to the battery compartment, or a negative electrode of the external circuit is connected to the conductive layer through the exposure opening, and a positive electrode is connected to the battery compartment. By providing the exposure opening to reveal the conductive layer, the manufacturing process is optimized, facilitating the lamination of the first adhesive layer, the conductive layer, and the third adhesive layer into the adhesive member. The risk of short circuit caused by electrical connection between the conductive layer and external conductive members is also reduced, and the structural strength of the first connecting segment is improved. When necessary, force may be applied to the first connecting segment to remove the battery from the battery compartment.

In one or more of the above optional implementations, the adhesive member includes an insulating layer. Along the second direction, the first adhesive layer, the conductive layer, the second adhesive layer, and the insulating layer, located in the first connecting segment, are sequentially stacked. The first adhesive layer located in the first connecting segment is connected to the second side wall or a side of the first sealing portion facing away from the first side wall. The exposure opening extends through the second adhesive layer and the insulating layer along the second direction. This reduces the risk of short circuit caused by contact between the conductive layer and the battery compartment.

In one or more of the above optional implementations, in the first direction, a projection of the conductive layer located in the first connecting segment along the second direction is within a projection of the second adhesive layer and the insulating layer along the second direction, or end portions of the first adhesive layer, the conductive layer, the second adhesive layer, and the insulating layer, located in the first connecting segment, are arranged flush with each other. This reduces the risk of short circuit caused by contact between the conductive layer and the battery compartment.

In one or more of the above optional implementations, the adhesive member includes a second connecting segment. Along the second direction, the battery is located between the second connecting segment and the first connecting segment. Along the second direction, the second adhesive layer, the conductive layer, and the first adhesive layer, located in the second connecting segment, are sequentially stacked. The first adhesive layer located in the second connecting segment is connected to the first side wall.

In one or more of the above optional implementations, the battery further includes a protection board. The protection board is disposed on the top wall and is connected to the electrode tab. The adhesive member covers the protection board and the first sealing portion. The first connecting segment is connected to the second side wall, and the second connecting segment is connected to the first side wall. This provides insulation protection for the protection board and the first sealing portion.

In one or more of the above optional implementations, the battery further includes a protection board. The protection board is disposed on the top wall and is connected to the electrode tab. The first sealing portion extends along the first direction. Along the second direction, the protection board is located on a side of the first sealing portion facing away from the first side wall. The first connecting segment extends to a side of the protection board facing away from the first sealing portion.

An embodiment of the present application further provides an electric device including the battery assembly according to any of the above embodiments. The electric device includes a battery compartment. The second adhesive layer is connected to the battery compartment, and the second adhesive layer is configured such that an adhesiveness of the second adhesive layer is reduced or lost when a current is conducted between the conductive layer and the battery compartment.

### BRIEF DESCRIPTION OF DRAWINGS

FIG. 1 shows a schematic structural diagram of a battery assembly and a battery compartment in some embodiments.
FIG. 2 shows a schematic structural diagram of a battery assembly and a battery compartment in some embodiments viewed from a direction opposite to the second direction Y.
FIG. 3 shows a schematic cross-sectional view of the battery assembly and the battery compartment in the embodiments of FIG. 2.
FIG. 4 shows an exploded schematic diagram of a battery assembly in some embodiments.
FIG. 5 shows a simplified cross-sectional view of a battery assembly and a battery in some embodiments.
FIG. 6 shows an exploded schematic diagram of an adhesive member in some embodiments.
FIG. 7 shows a schematic structural diagram of a battery assembly in some embodiments.
FIG. 8 shows a schematic structural diagram of the battery assembly in the embodiments of FIG. 7 from another perspective.
FIG. 9 shows a schematic structural diagram of the battery assembly in the embodiments of FIG. 7 from yet another perspective.
FIG. 10 shows a schematic cross-sectional view of the battery assembly in the embodiments of FIG. 7.
FIG. 11 shows an enlarged schematic structural diagram of region A in FIG. 10.
FIG. 12 shows an enlarged schematic structural diagram of region B in FIG. 10.
FIG. 13 shows a schematic structural diagram of a battery assembly in other embodiments.
FIG. 14 shows a schematic cross-sectional view of the battery assembly in the embodiments of FIG. 13.
FIG. 15 shows an enlarged schematic structural diagram of region C in FIG. 14.
FIG. 16 shows an enlarged schematic structural diagram of region D in FIG. 14.
FIG. 17 shows a schematic structural diagram of a battery assembly in some embodiments.
FIG. 18 shows a schematic structural diagram of a battery assembly in still other embodiments.
FIG. 19 shows a schematic structural diagram of the battery assembly in FIG. 18 from another perspective.
FIG. 20 shows a schematic structural diagram of the battery assembly in FIG. 18 from yet another perspective.
FIG. 21 shows a schematic structural diagram of a battery assembly in still other embodiments.
FIG. 22 shows a schematic structural diagram of the battery assembly in FIG. 21 from another perspective.
FIG. 23 shows a schematic structural diagram of the battery assembly in FIG. 21 from yet another perspective.
FIG. 24 shows a schematic structural diagram of the battery assembly in FIG. 21 from a further perspective.
FIG. 25 shows a schematic structural diagram of a battery assembly in still further embodiments.
FIG. 26 shows a schematic structural diagram of a battery assembly in still other embodiments.
FIG. 27 shows a schematic structural diagram of a battery assembly in yet other embodiments.
FIG. 28 shows a schematic structural diagram of a battery assembly and a battery compartment in yet other embodiments.
FIG. 29 shows an exploded schematic diagram of the adhesive member in FIG. 26.
FIG. 30 shows a schematic structural diagram of the adhesive member in FIG. 26.
FIG. 31 shows a schematic structural diagram of an adhesive member in other embodiments.
FIG. 32 shows a schematic structural diagram of an adhesive member in still other embodiments.
FIG. 33 shows a schematic cross-sectional view of FIG. 28 taken along II-II.
FIG. 34 shows a schematic structural diagram of a battery assembly in still other embodiments.
FIG. 35 shows a schematic structural diagram of an electric device in some embodiments.

**Reference signs of main components:**

| | |
|---|---|
| Battery assembly | 100 |
| Battery | 10 |
| Packaging bag | 11 |
| Main body portion | 11a |
| Top wall | 111 |
| Bottom wall | 112 |
| First side wall | 113 |
| Second side wall | 114 |
| Third side wall | 115 |
| Fourth side wall | 116 |
| Sealing portion | 11b |
| First sealing portion | 101 |
| Second sealing portion | 102 |
| Accommodation space | 103 |
| Electrode tab | 12 |
| First protective layer | 13 |
| Protection board | 14 |
| Elastic member | 14a |
| Adapter | 15 |
| Second protective layer | 16 |
| First opening | 161 |
| Second opening | 162 |
| Adhesive member | 20 |
| Conductive layer | 21 |
| Substrate layer | 21a |
| Conductive sublayer | 21b |
| First body | 211 |
| First extension segment | 212 |
| First section | 212a |
| Second section | 212b |
| Third section | 212c |
| First adhesive layer | 22 |
| Second body | 221 |
| Second extension segment | 222 |
| Second adhesive layer | 23 |
| First edge | 23a |
| Second edge | 23b |
| Third body | 231 |
| Third extension segment | 232 |
| Fourth section | 232a |
| Fifth section | 232b |
| Sixth section | 232c |
| Insulating layer | 24 |
| First connecting segment | 210 |
| Exposure opening | 210a |
| Second connecting segment | 220 |
| Third connecting segment | 230 |
| Protective film | 100a |
| Tear-off portion | 110 |
| External device | 200 |
| Battery compartment | 201 |
| Electric device | 300 |
| First direction | X |
| Second direction | Y |
| Third direction | Z |

The present application will be further described with reference to the accompanying drawings in the following specific embodiments.

### DESCRIPTION OF EMBODIMENTS

The following specific embodiments are illustrative and not restrictive, and are intended to provide a basic understanding of the present application, and are not intended to identify key or decisive elements of the present application or to limit the scope to be protected. As long as there is no structural conflict, the technical features mentioned in the various embodiments can be combined in any manner.

When one component is assumed to be "disposed at/on/in" another component, the component may be provided directly at/on/in the another component or with a component possibly present therebetween. When one component is assumed to be "connected to" another component, it may be connected to the another component directly or with a component possibly present therebetween.

It should be understood that the term "perpendicular" is used to describe an ideal state between two components. During actual production or use state, an approximately perpendicular or equal state may be present between the two components. For example, in conjunction with numerical description, perpendicular may alternatively indicate that a dihedral angle of two planes is within a range of 90°±10°, and perpendicular may further alternatively indicate that an included angle between a straight line and a plane is within a range of 90°±10°. Two components described as "perpendicular" to each other may not be absolutely straight lines or planes, and may be substantially straight lines or planes. From a macro perspective, a component can be considered as a "straight line" or "plane" as long as the overall extension direction is a straight line or a plane.

The terms "perpendicular", "horizontal", "left", "right", "top", "bottom", "front", "rear" and similar expressions used herein are for illustrative purposes only and are not used to limit the present application.

Unless otherwise defined, the term "a plurality of" used herein when describing the number of components specifically indicates that there are two or more components.

Embodiments of the present application provide a battery assembly including a battery and an adhesive member. The adhesive member is configured to adhere the battery to a battery compartment. The battery includes a packaging bag and an electrode tab. The packaging bag includes a top wall, a bottom wall, a first side wall, and a second side wall. The top wall and the bottom wall are arranged along a first direction. The first side wall and the second side wall are arranged along a second direction. The first side wall is connected to the top wall and the bottom wall. The second side wall is connected to the top wall and the bottom wall. The packaging bag includes a first sealing portion. The first sealing portion is connected to the top wall, and the electrode tab extends out from the first sealing portion. The first direction is perpendicular to the second direction, and the second direction is a thickness direction of the battery. The adhesive member includes a first adhesive layer, a second adhesive layer, and a conductive layer. The first adhesive layer is connected to the first side wall. The second adhesive layer is configured to connect the battery compartment. One side of the conductive layer is connected to the first adhesive layer, and at least a part of another side of the conductive layer is connected to the second adhesive layer. The conductive layer includes a first body and a first extension segment connected to the first body. The first body is connected to the first side wall. Part of the first extension segment extends to the second side wall or a side of the first sealing portion facing away from the first side wall. The second adhesive layer is configured such that an adhesiveness of the second adhesive layer is reduced or lost when a current is conducted between the conductive layer and the battery compartment. By configuring the second adhesive layer such that an adhesiveness of the second adhesive layer is reduced or lost when a current is conducted between the conductive layer and the battery compartment, removal of the battery from the battery compartment is facilitated, reducing the risk of damaging the battery. Extending part of the first extension segment to a side of the first sealing portion facing away from the first side wall can reduce the space occupied by the first extension segment in the second direction and improve space utilization.

Some implementations of the present application will be described in detail below with reference to the accompanying drawings. In the case of no conflict, the following implementations and features in these implementations can be combined with each other.

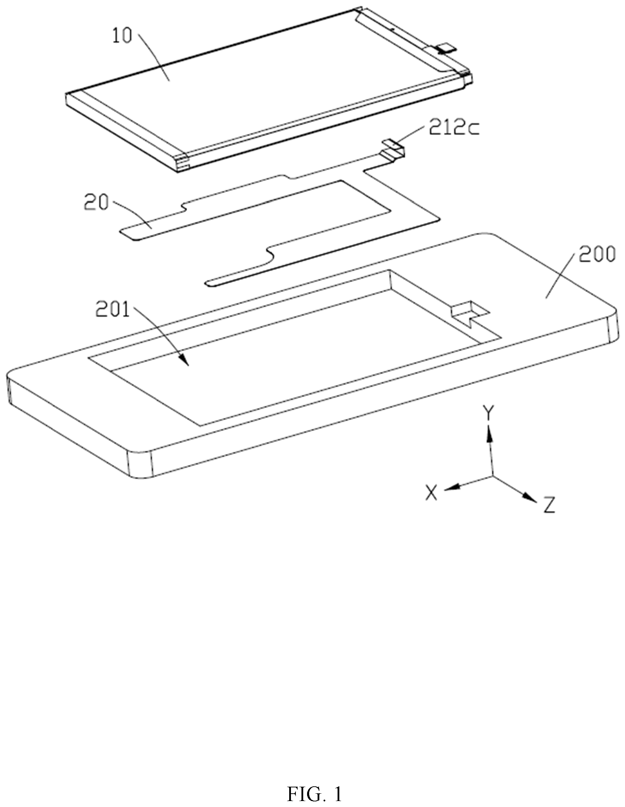

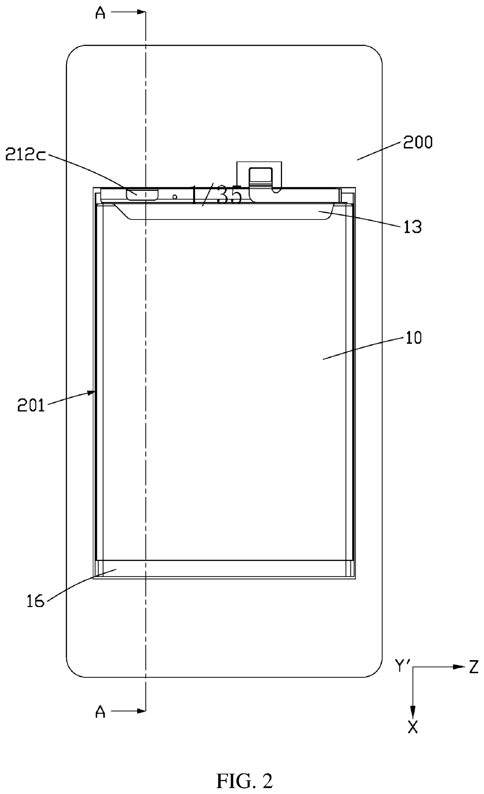

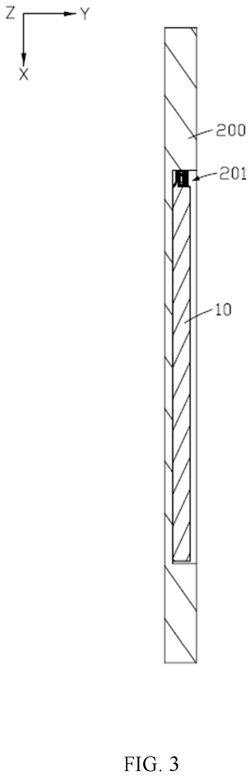

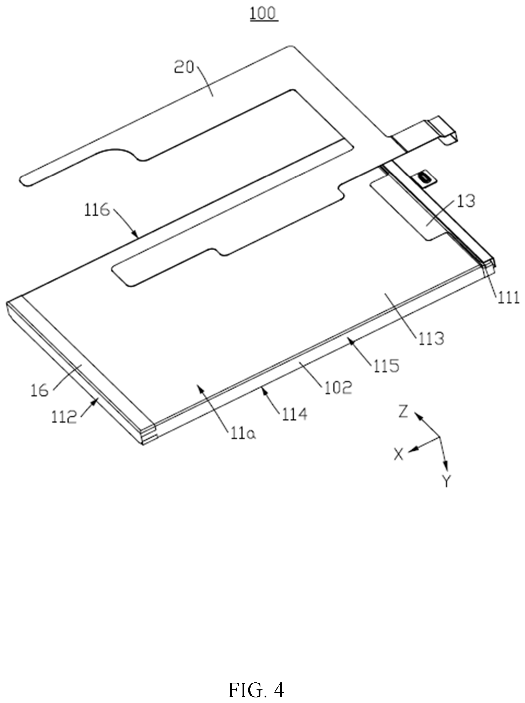

Referring to FIG. 1 to FIG. 6, a first embodiment of the present application provides a battery assembly 100 including a battery 10 and an adhesive member 20. The adhesive member 20 is configured to adhere the battery 10 to a battery compartment 201 of an external electric device 200. The battery compartment 201 should be understood in the present application as a chamber in the electric device 200 for accommodating the battery 100. The shape and size of the battery compartment are designed according to the shape and size of the battery used. For example, the battery compartment may be a chamber in a metal middle frame of a mobile phone for accommodating the battery 100, or an accommodating chamber for accommodating the battery 100 formed by surrounding a display screen and other components of the mobile phone. The accommodating chamber may be sealed or unsealed. The present application does not limit the type and structure of the battery compartment.

In some embodiments, the battery 10 includes a packaging bag 11 and an electrode tab 12. The electrode tab 12 extends out of the packaging bag 11.

In some embodiments, the battery 10 includes an electrode assembly (not shown in the figures). The electrode assembly is disposed in the packaging bag 11, and the electrode tab 12 is connected to the electrode assembly.

In some embodiments, the packaging bag 11 includes a main body portion 11a and a sealing portion 11b. The main body portion 11a is connected to the sealing portion 11b. The electrode assembly is disposed in the main body portion 11a, and the electrode tab 12 extends out from the sealing portion 11b.

In some embodiments, the main body portion 11a includes a top wall 111, a bottom wall 112, a first side wall 113, and a second side wall 114. The top wall 111 and the bottom wall 112 are arranged along a first direction X. The first side wall 113 and the second side wall 114 are arranged along a second direction Y. The first side wall 113 is connected to the top wall 111 and the bottom wall 112. The second side wall 114 is connected to the top wall 111 and the bottom wall 112. The sealing portion 11b includes a first sealing portion 101. The first sealing portion 101 is connected to the top wall 111. The electrode tab 12 extends out from the first sealing portion 101. The first direction X is perpendicular to the second direction Y, and the second direction Y is a thickness direction of the battery 10.

In some embodiments, the main body portion 11a includes a third side wall 115 and a fourth side wall 116 arranged along a third direction Z. The third side wall 115 is connected to the top wall 111, the bottom wall 112, the first side wall 113, and the second side wall 114. The fourth side wall 116 is connected to the top wall 111, the bottom wall 112, the first side wall 113, and the second side wall 114. The first direction X, the second direction Y, and the third direction Z are mutually perpendicular.

In some embodiments, the sealing portion 11b includes two second sealing portions 102. One of the second sealing portions 102 is connected to the third side wall 115, and the other second sealing portion 102 is connected to the fourth side wall 116.

In some embodiments, the adhesive member 20 includes a conductive layer 21, a first adhesive layer 22, and a second adhesive layer 23. The first adhesive layer 22 is connected to the first side wall 113. The second adhesive layer 23 is used to connect the battery compartment 201. One side of the conductive layer 21 is connected to the first adhesive layer 22, and at least a part of another side of the conductive layer 21 is connected to the second adhesive layer 23. The conductive layer 21 includes a first body 211 and a first extension segment 212 connected to the first body 211. The first body 211 is connected to the first side wall 113. Part of the first extension segment 212 extends to the second side wall 114 or a side of the first sealing portion 101 facing away from the first side wall 113, to connect to an external power supply. The second adhesive layer 23 is configured such that an adhesiveness of the second adhesive layer is reduced or lost when a current is conducted between the conductive layer 21 and the battery compartment 201.

In the present application, by configuring the second adhesive layer 23 such that an adhesiveness of the second adhesive layer is reduced or lost when a current is conducted between the conductive layer 21 and the battery compartment 201, removal of the battery 10 from the battery compartment 201 is facilitated, reducing the risk of damaging the battery 10. Extending part of the first extension segment 212 to a side of the first sealing portion 101 facing away from the first side wall 113 can reduce the space occupied by the first extension segment 212 in the second direction Y, thereby improving space utilization.

It can be understood that the battery compartment 201 is electrically conductive. When a voltage is applied to the conductive layer 21 and the battery compartment 201, anions in the second adhesive layer 23 migrate toward the positive electrode, and cations migrate toward the negative electrode. The ions are deposited on the surface of the battery compartment 201, hindering the adhesion force of the second adhesive layer 23, so that the adhesiveness is reduced or lost. As time elapses after the voltage is applied, the ions migrated to the positive and negative electrodes are dispersed, and the adhesive force of the second adhesive layer 23 gradually recovers, enabling the battery 10 to be re-adhered to the battery compartment 201.

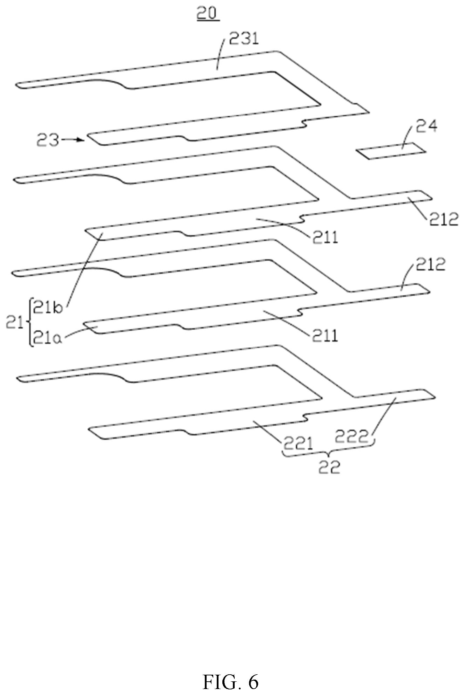

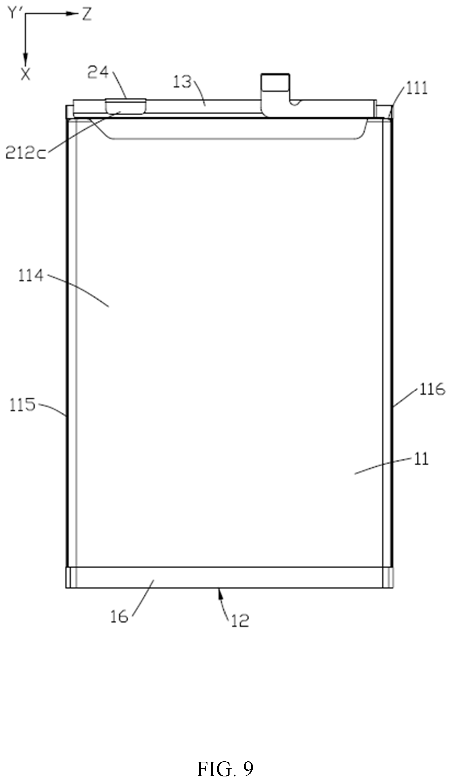

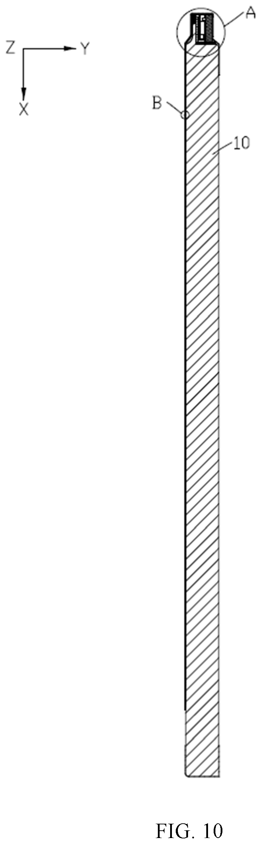

Referring to FIG. 6 to FIG. 11, in some embodiments, along the second direction Y, a projection of the first body 211 is within a projection range of the first side wall 113, thereby reducing the space occupied by the first body 211 in the first direction X.

In some embodiments, along the first direction X, a projection of the first extension segment 212 is within a projection range of the top wall 111. Arranging part of the first extension segment 212 in an accommodation space formed by the top wall 111 and the first sealing portion 101 facilitates reduction of the thickness space occupied by the first extension segment 212, so that the first extension segment 212 does not extend beyond the first side wall 113 and the second side wall 114, facilitating reduction of the thickness of the battery assembly 100.

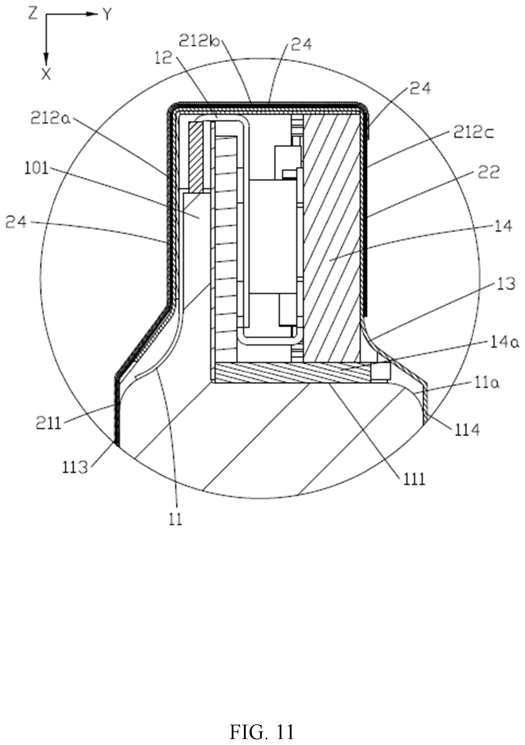

Referring to FIG. 11, in some embodiments, the first extension segment 212 includes a first section 212a. The first section 212a is connected to the first body 211. The first section 212a is located on a side of the first sealing portion 101 toward the first side wall 113.

In some embodiments, the first extension segment 212 includes a second section 212b. The second section 212b is connected to the first section 212a. The second section 212b is located on a side of the first sealing portion 101 facing away from the top wall 111.

In some embodiments, the first extension segment 212 includes a third section 212c. The third section 212c is connected to a side of the second section 212b facing away from the first section 212a. The third section 212c is located on a side of the first sealing portion 101 facing away from the first side wall 113, and at least a part of the third section 212c is exposed at an outermost side of the battery assembly 100 for connection to an external power supply.

In some embodiments, along the first direction X, projections of the first section 212a, the second section 212b, and the third section 212c are all located within a projection range of the top wall 111.

In some embodiments, a length of the third section 212c is smaller than a length of the first section 212a, facilitating reduction of the space occupied by the third section 212c.

In some embodiments, the conductive layer 21 is made of a conductive material. Optionally, the conductive layer 21 includes a metal foil. Optionally, the metal foil includes aluminum foil, copper foil, and the like.

In some embodiments, the conductive layer 21 is made of a conductive material and a substrate, and the conductive material covers a surface of the substrate.

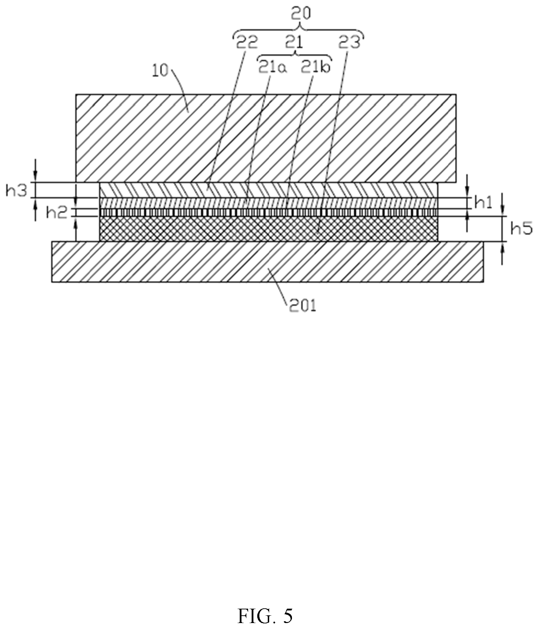

Referring to FIG. 5 and FIG. 6, in some embodiments, the conductive layer 21 includes a substrate layer 21a and a conductive sublayer 21b. The substrate layer 21a is connected to the first adhesive layer 22. The conductive sublayer 21b is connected to a side of the substrate layer 21a facing away from the first adhesive layer 22, facilitating adhesion of the conductive layer 21 to the first adhesive layer 22.

In some embodiments, the conductive sublayer 21b is electroplated on a side of the substrate layer 21a facing away from the first adhesive layer 22.

In some embodiments, the substrate layer 21a includes one of polyethylene terephthalate (PET), polycarbonate (PC), and aramid.

In some embodiments, the conductive sublayer 21b includes one of aluminum, copper, and nickel.

In some embodiments, a thickness h1 of the substrate layer 21a satisfies 0.008 mm ≤ h1 ≤ 0.05 mm. If h1 is less than 0.008 mm, the thickness of the substrate layer 21a is too small to support the conductive sublayer 21b. If h1 is greater than 0.05 mm, the thickness of the substrate layer 21a is too large, increasing the occupied space. By limiting 0.008 mm ≤ h1 ≤ 0.05 mm, the conductive sublayer 21b can be supported while reducing the space occupied by the substrate layer 21a.

Optionally, h1 (in mm) may be any one of 0.008, 0.009, 0.01, 0.011, 0.012, 0.013, 0.014, 0.015, 0.016, 0.017, 0.018, 0.019, 0.02, 0.021, 0.022, 0.023, 0.024, 0.025, 0.026, 0.027, 0.028, 0.029, 0.03, 0.031, 0.032, 0.033, 0.034, 0.035, 0.036, 0.037, 0.038, 0.039, 0.04, 0.041, 0.042, 0.043, 0.044, 0.045, 0.046, 0.047, 0.048, 0.049, and 0.05.

In some embodiments, a thickness h2 of the conductive sublayer 21b satisfies 0.002 mm ≤ h2 ≤ 0.02 mm. If h2 is less than 0.002 mm, the thickness of the conductive sublayer 21b is too small, resulting in poor conductivity and insufficient weakening of the adhesiveness of the second adhesive layer 23, thereby affecting removal of the battery 10. If h2 is greater than 0.02 mm, the thickness of the conductive sublayer 21b is too large, increasing the occupied space. By limiting 0.002 mm ≤ h2 ≤ 0.02 mm, the conductivity of the conductive sublayer 21b can be ensured, and the space occupied by the conductive sublayer 21b can be reduced.

Optionally, h2 (in mm) may be any one of 0.002, 0.003, 0.004, 0.005, 0.006, 0.007, 0.008, 0.009, 0.01, 0.011, 0.012, 0.013, 0.014, 0.015, 0.016, 0.017, 0.018, 0.019, and 0.02.

Referring to FIG. 6 to FIG. 11, in some embodiments, the first adhesive layer 22 includes a second body 221 and a second extension segment 222 connected to the second body 221. Along a thickness direction of the first adhesive layer 22, one side of the second body 221 is connected to the first body 211, and another side of the second body 221 is connected to the first side wall 113. Along the thickness direction of the first adhesive layer 22, one side of the second extension segment 222 is connected to the first extension segment 212, and another side of the second extension segment 222 is connected to the first sealing portion 101. Along the second direction Y, a projection of the first body 211, a projection of the second body 221, and a projection of the second adhesive layer 23 are all located within the projection range of the first side wall 113, increasing the area of the first adhesive layer 22 connected to the battery 10, improving the connection strength between the first adhesive layer 22 and the battery 10, and reducing the space occupied in the second direction Y.

In some embodiments, a thickness h3 of the first adhesive layer 22 satisfies 0.01 mm ≤ h3 ≤ 0.05 mm. If h3 is less than 0.01 mm, the thickness of the first adhesive layer 22 is too small and the adhesive force is weak. If h3 is greater than 0.05 mm, the thickness of the first adhesive layer 22 is too large, increasing the occupied space. By limiting 0.01 mm ≤ h3 ≤ 0.05 mm, the adhesive effect of the first adhesive layer 22 can be achieved and the space occupied by the first adhesive layer 22 can be reduced.

Optionally, h3 (in mm) may be any one of 0.01, 0.011, 0.012, 0.013, 0.014, 0.015, 0.016, 0.017, 0.018, 0.019, 0.02, 0.021, 0.022, 0.023, 0.024, 0.025, 0.026, 0.027, 0.028, 0.029, 0.03, 0.031, 0.032, 0.033, 0.034, 0.035, 0.036, 0.037, 0.038, 0.039, 0.04, 0.041, 0.042, 0.043, 0.044, 0.045, 0.046, 0.047, 0.048, 0.049, and 0.05.

Referring to FIG. 6 to FIG. 11, in some embodiments, the adhesive member 20 includes an insulating layer 24. The insulating layer 24 covers a side of the first section 212a facing away from the second extension segment 222 and a side of the second section 212b facing away from the second extension segment 222, thereby reducing the risk of short circuit caused by contact between the conductive layer 21 and the battery compartment 201. If the conductive layer 21 is in contact with the battery compartment 201, the part of the conductive layer 21 in contact with the battery compartment 201 may short-circuit the second adhesive layer 23 during energization, so that current cannot pass through the second adhesive layer 23, resulting in failure to weaken or eliminate the adhesiveness of the second adhesive layer 23.

In some embodiments, the insulating layer 24 covers a side of the first section 212a facing away from the second extension segment 222 and a side of the second section 212b facing away from the second extension segment 222, and covers a side of part of the third section 212c facing away from the second extension segment 222. At least a part of a side of the third section 212c facing away from the second extension segment 222 is exposed through the insulating layer 24, thereby further reducing the risk of short circuit caused by contact between the conductive layer 21 and the battery compartment 201.

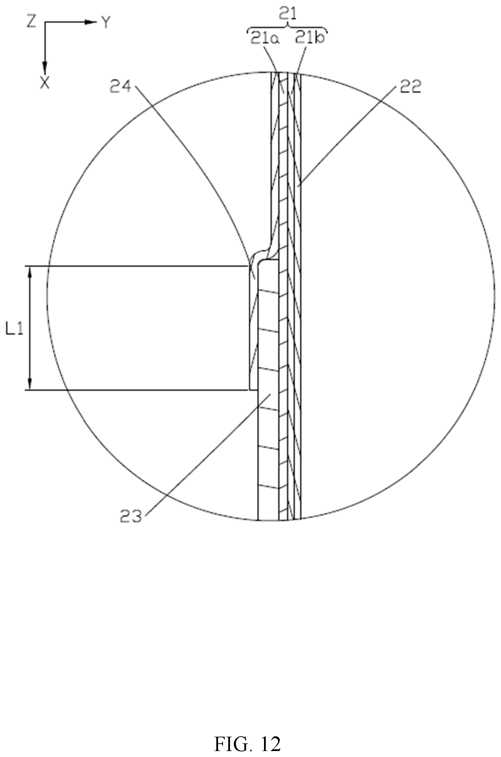

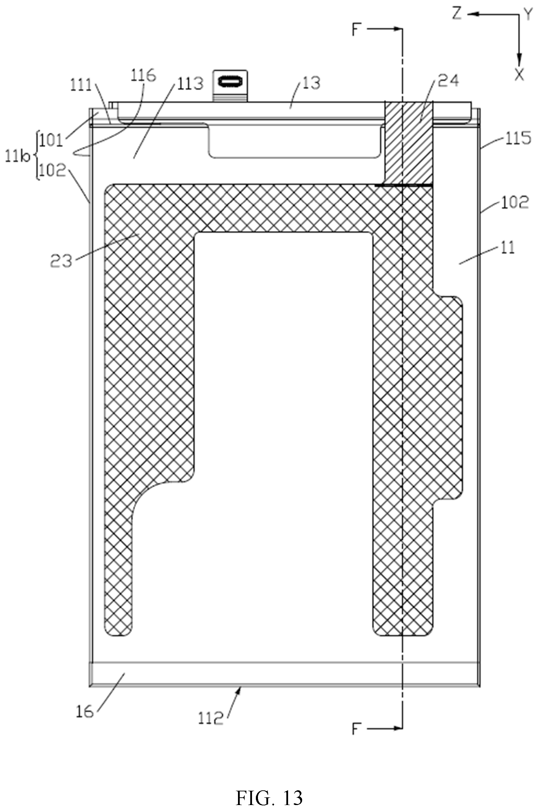

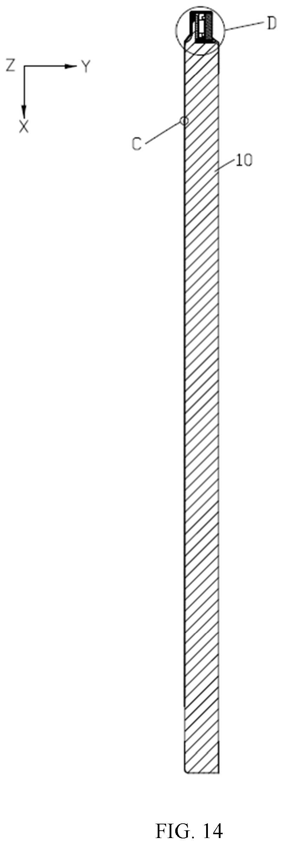

Referring to FIG. 12 to FIG. 15, in some embodiments, along the second direction Y, a projection of the insulating layer 24 overlaps with a projection of the second adhesive layer 23, that is, an end of the second adhesive layer 23 close to the first sealing portion 101 overlaps with the projection of the insulating layer 24. The insulating layer 24 covers a region in which the conductive layer 21 is exposed at the interface with the second adhesive layer 23. Due to fitting tolerances, gaps are likely to form between the insulating layer 24 and the second adhesive layer 23. The conductive layer 21 in the gaps is prone to short-circuit with the battery compartment 201. By arranging the insulating layer 24 and the second adhesive layer 2 to partially overlap, the formation of gaps can be reduced, further reducing the risk of short circuit caused by contact between the conductive layer 21 and the battery compartment 201.

Referring to FIG. 12, in some embodiments, the insulating layer 24 covers part of the second adhesive layer 23. Part of the second adhesive layer 23 is located between the insulating layer 24 and the conductive layer 21.

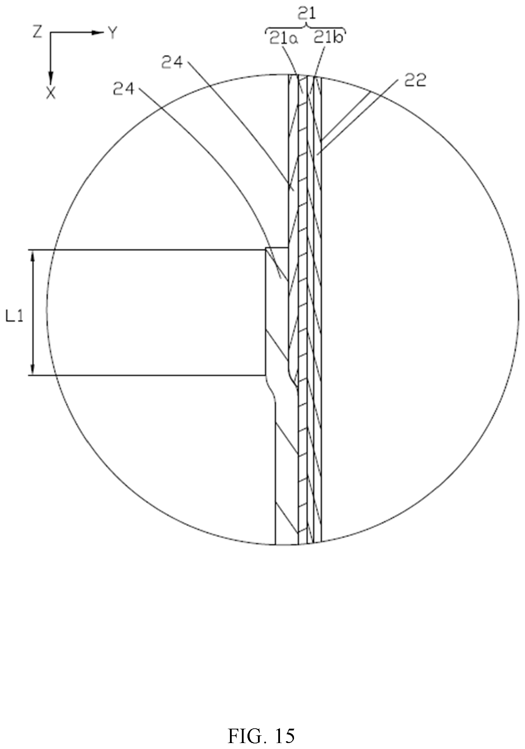

Referring to FIG. 15, in some embodiments, the second adhesive layer 23 covers part of the insulating layer 24, and part of the insulating layer 24 is located between the second adhesive layer 23 and the conductive layer 21.

In some embodiments, when along the second direction Y, a width L1 of an overlapping region of the insulating layer 24 and the second adhesive layer 23 satisfies 0 < L1 < 2 mm, insulation can be achieved, and the thickness space occupied by the overlapping region can be reduced.

In some embodiments, a thickness h4 of the insulating layer 24 satisfies 0.005 mm ≤ h4 ≤ 0.05 mm. If h4 is less than 0.005 mm, the insulating layer 24 is too small, affecting the insulation effect. If h4 is greater than 0.05 mm, the thickness of the insulating layer 24 is too large, increasing the occupied space. By limiting 0.005 mm ≤ h4 ≤ 0.05 mm, the insulation effect of the insulating layer 24 can be ensured, and the space occupied by the insulating layer 24 can be reduced.

Optionally, h4 (in mm) may be any one of 0.005, 0.006, 0.007, 0.008, 0.009, 0.01, 0.011, 0.012, 0.013, 0.014, 0.015, 0.016, 0.017, 0.018, 0.019, 0.02, 0.021, 0.022, 0.023, 0.024, 0.025, 0.026, 0.027, 0.028, 0.029, 0.03, 0.031, 0.032, 0.033, 0.034, 0.035, 0.036, 0.037, 0.038, 0.039, 0.04, 0.041, 0.042, 0.043, 0.044, 0.045, 0.046, 0.047, 0.048, 0.049, and 0.05.

In some embodiments, a material of the insulating layer 24 includes polyethylene terephthalate (PET) or polyimide (PI).

Referring to FIG. 6, in some embodiments, the second adhesive layer 23 includes a third body 231. Along the second direction Y, one side of the third body 231 is connected to the first body 211, and another side of the third body 231is configured to be connected to the battery compartment 201. Along the second direction Y, a projection of the first body 211, a projection of the second body 221, and a projection of the third body 231 are all located within a projection of the first side wall 113, and a projection of the insulating layer 24 overlaps with a projection of the third body 231.

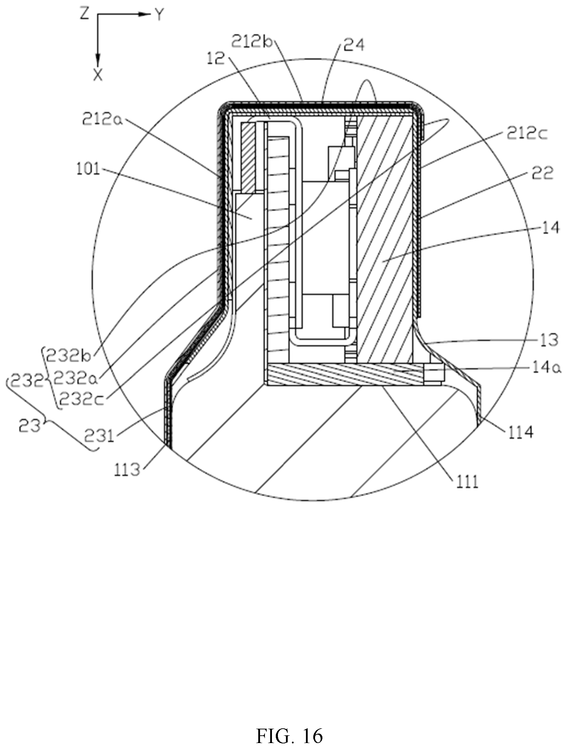

Referring to FIG. 16, in some embodiments, the second adhesive layer 23 includes a third body 231 and a third extension segment 232 connected to the third body 231. Along the second direction Y, one side of the third body 231 is connected to the first body 211, and another side of the third body 231 is configured to be connected to the battery compartment 201. Along the second direction Y, a projection of the first body 211, a projection of the second body 221, and a projection of the third body 231 are all located within a projection of the first side wall 113.

In some embodiments, the third extension segment 232 includes a fourth section 232a. Along the second direction Y, a side of the fourth section 232a is connected to the first section 212a, and a projection of the insulating layer 24 overlaps with a projection of the fourth section 232a.

In some embodiments, the third extension segment 232 includes a fourth section 232a, a fifth section 232b, and a sixth section 232c connected in sequence. The fourth section 232a is connected to the third body 231. A side of the fourth section 232a is connected to the first section 212a, a side of the fifth section 232b is connected to the second section 212b, and a side of the sixth section 232c is connected to the third section 212c. The third section 212c is at least partially exposed from the sixth section 232c.

In some embodiments, the insulating layer 24 covers a side of the fourth section 232a away from the first extension segment 212 and a side of the fifth section 232b away from the first extension segment 212. Due to a gap between the first sealing portion 101 and an inner wall of the battery compartment 201, impurities such as dust and debris are likely to be adsorbed onto the second adhesive layer 23. By covering the fourth section 232a and the fifth section 232b with the insulating layer 24, the adsorption of impurities such as dust and debris onto the second adhesive layer 23 can be reduced.

In some embodiments, the insulating layer 24 covers a side of the fourth section 232a facing away from the first extension segment 212, a side of the fifth section 232b facing away from the first extension segment 212, and a side of the sixth section 232c facing away from the first extension segment 212. This can further reduce the adsorption of impurities such as dust and debris onto the second adhesive layer 23.

In some embodiments, a thickness h5 of the second adhesive layer 23 satisfies 0.025 mm ≤ h5 ≤ 0.1 mm. If h5 is less than 0.025 mm, the thickness of the second adhesive layer 23 is too small, affecting the effect of fixing the battery 10 to the battery compartment 201. If h5 is greater than 0.1 mm, the thickness of the second adhesive layer 23 is too large, increasing the occupied space. By limiting 0.025 mm ≤ h5 ≤ 0.1 mm, the fixing effect of the second adhesive layer 23 can be ensured, and the space occupied by the second adhesive layer 23 can be reduced.

Optionally, h5 (in mm) may be any one of 0.025, 0.026, 0.027, 0.028, 0.029, 0.03, 0.031, 0.032, 0.033, 0.034, 0.035, 0.036, 0.037, 0.038, 0.039, 0.04, 0.041, 0.042, 0.043, 0.044, 0.045, 0.046, 0.047, 0.048, 0.049, 0.05, 0.052, 0.054, 0.056, 0.058, 0.06, 0.062, 0.064, 0.066, 0.068, 0.07, 0.072, 0.074, 0.076, 0.078, 0.08, 0.082, 0.084, 0.086, 0.088, 0.09, 0.092, 0.094, 0.096, 0.098, and 0.1.

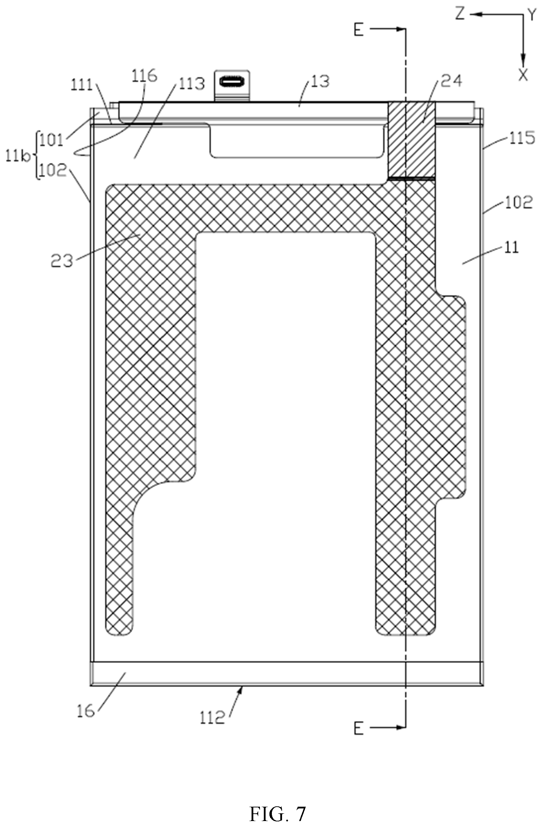

Referring to FIG. 7 and FIG. 11, in some embodiments, the battery 10 includes a first protective layer 13. The first protective layer 13 is connected to the first side wall 113, the first sealing portion 101, and the second side wall 114. The electrode tab 12 and at least a part of the first sealing portion 101 are located within the first protective layer 13. The first adhesive layer 22 is connected to the first protective layer 13. Along the second direction Y, a projection of the insulating layer 24 on the first side wall 113 is separated from a projection of the first protective layer 13 on the first side wall 113, thereby reducing the overlap between the insulating layer 24 and the first protective layer 13, reducing the occupied thickness space, and facilitating reduction of the thickness of the battery 10.

In some embodiments, the battery 10 includes a protection board 14. The protection board 14 is connected to the electrode tab 12. The protection board 14 is disposed within the first protective layer 13.

In some embodiments, the battery 10 includes an elastic member 14a. The elastic member 14a is disposed on the top wall 111. The protection board 14 is connected to the elastic member 14a. The elastic member 14a can buffer the protection board 14 along the first direction X.

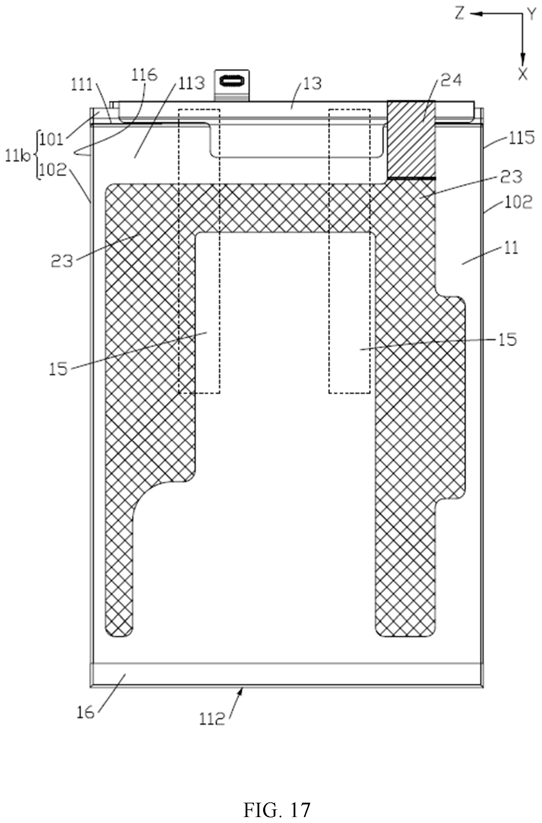

Referring to FIG. 17, in some embodiments, the battery 10 includes an adapter 15. The adapter 15 is located in the packaging bag 11. The adapter 15 is connected to the electrode assembly and the electrode tab 12. Along the second direction Y, a projection of the adapter 15 is separated from a projection of the insulating layer 24, thereby reducing the overlap between the insulating layer 24 and the adapter 15, reducing the occupied thickness space, and facilitating reduction of the thickness of the battery 10.

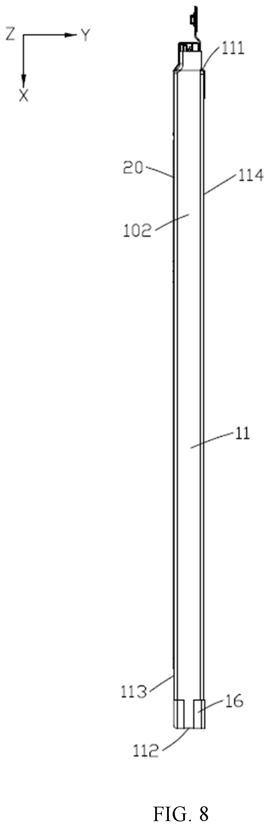

Referring to FIG. 8, in some embodiments, the battery 10 includes a second protective layer 16. The second protective layer 16 is extended from the first side wall 113 through the bottom wall 112 to the second side wall 114. The second protective layer 16 is connected to part of the first side wall 113, the bottom wall 112, and part of the second side wall 114. The second protective layer 16 is connected to part of the third side wall 115 and part of the fourth side wall 116.

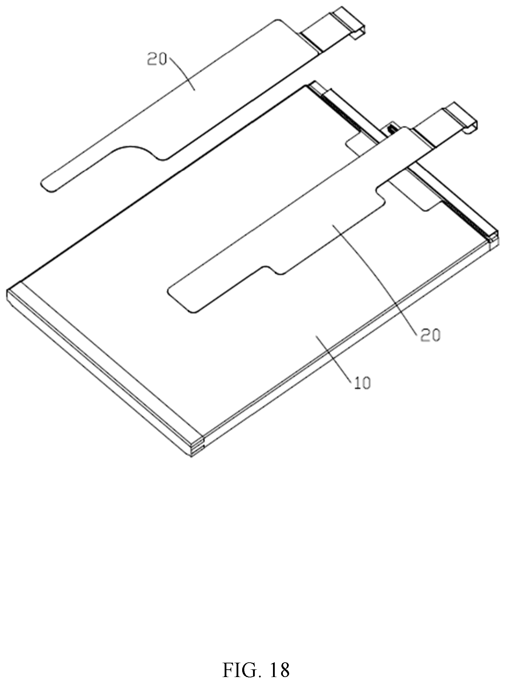

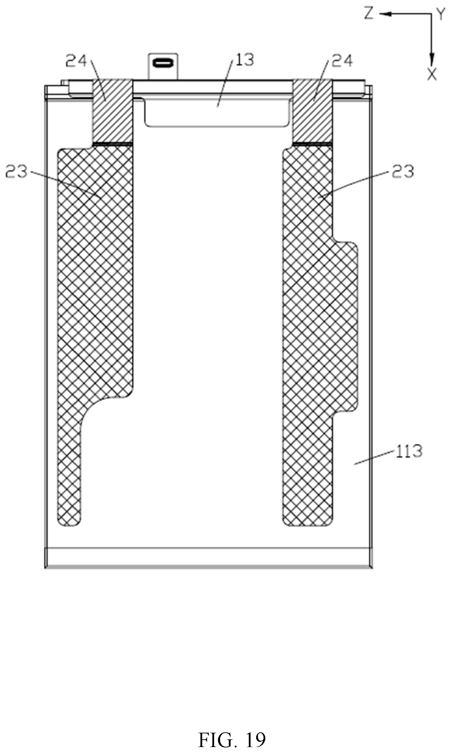

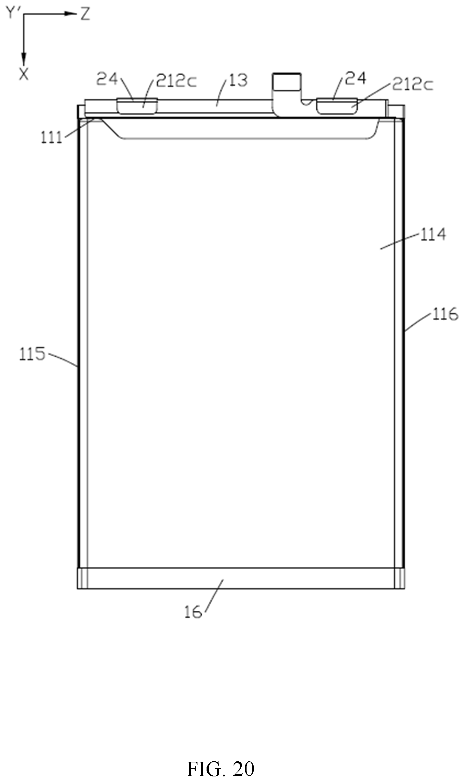

Referring to FIG. 18 to FIG. 20, in some embodiments, the battery assembly 100 includes two adhesive members 20. When viewed along the second direction Y, the two adhesive members 20 are spaced apart in the third direction Z. The third section 212c of each adhesive member 20 extends to a side of the first sealing portion 101 facing away from the first side wall 113 to connect to an external power supply. Each adhesive member 20 is disposed at different positions of the same battery compartment 201 to adapt to battery compartments 201 of different structures.

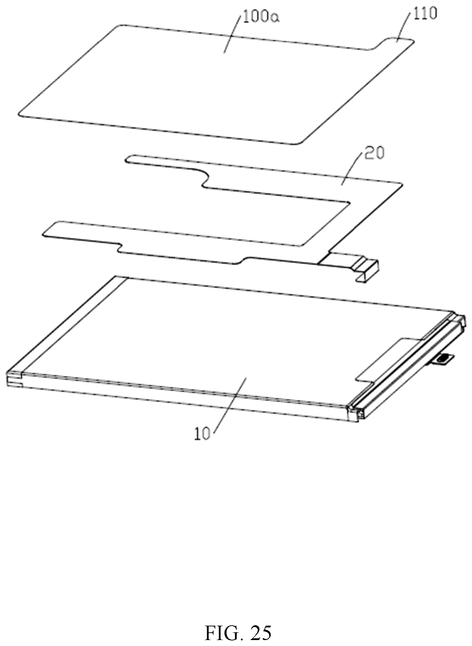

Referring to FIG. 25, in some embodiments, the battery assembly 100 includes a protective film 100a. The protective film 100a is attached to a side of the second adhesive layer 23 facing away from the first adhesive layer 22, reducing adhesion of foreign matter to the second adhesive layer 23 during manufacturing of the battery 10.

In some embodiments, the protective film 100a includes a tear-off portion 110. The tear-off portion 110 protrudes from the packaging bag 11, facilitating tearing off the protective film 100a.

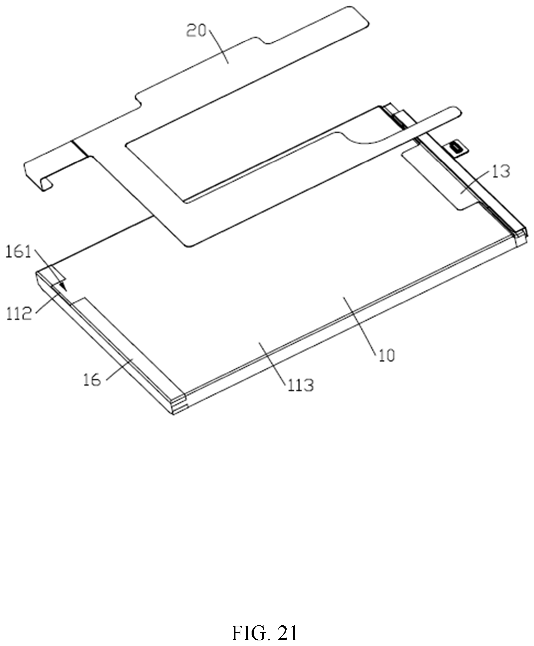

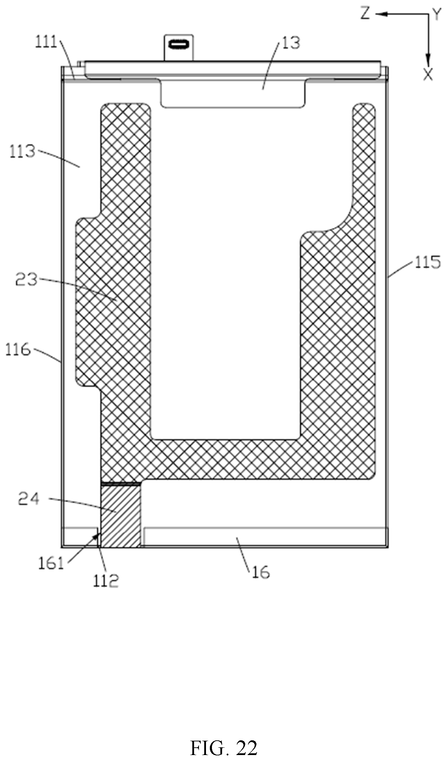

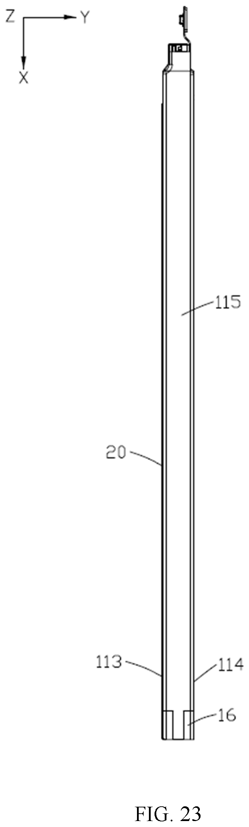

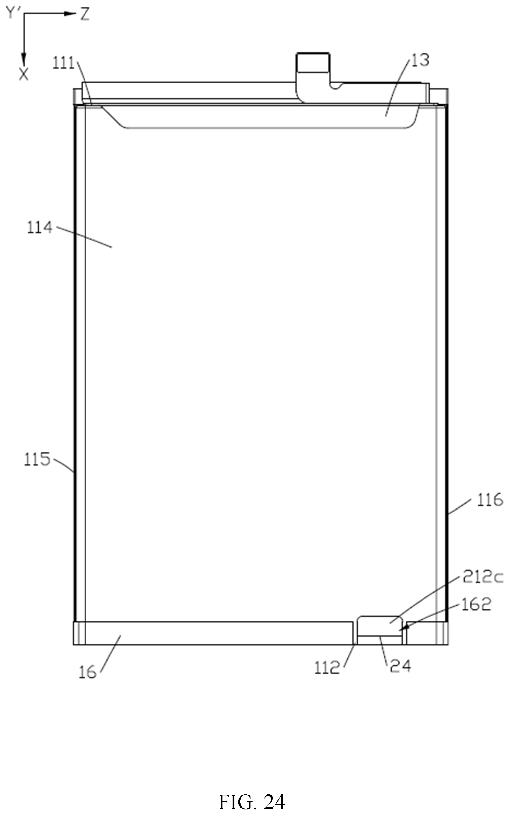

Referring to FIG. 21 to FIG. 24, a second embodiment of the present application provides a battery assembly 100 in which part of the conductive layer 21 extends through the bottom wall 112 to a side of the second side wall 114 facing away from the first side wall 113.

In some embodiments, along a thickness direction of the first adhesive layer 22, a side of the second body 221 is connected to the first side wall 113. Part of the second extension segment 222 extends to a side of the second side wall 114 facing away from the first side wall 113. A side of the second extension segment 222 is connected to the first side wall 113, the bottom wall 112, and the second side wall 114.

In some embodiments, the first body 211 is connected to a side of the second body 221 facing away from the packaging bag 11. The first extension segment 212 is connected to a side of the second extension segment 222 facing away from the packaging bag 11. Part of the first extension segment 212 extends to a side of the second side wall 114 facing away from the first side wall 113 to connect to an external power supply. Specifically, the first section 212a is connected to the first side wall 113, the second section 212b is connected to the bottom wall 112, and the third section 212c is connected to the second side wall 114.

In some embodiments, the second adhesive layer 23 includes a third body 231. Along the second direction Y, one side of the third body 231 is connected to the first body 211, and another side of the third body 231 is configured to be connected to the battery compartment 201. Along the second direction Y, a projection of the first body 211, a projection of the second body 221, and a projection of the third body 231 are all located within a projection of the first side wall 113.

In some embodiments, the second adhesive layer 23 includes a third body 231 and a third extension segment 232 connected to the third body 231. The third extension segment 232 includes a fourth section 232a. Along the second direction Y, a side of the fourth section 232a is connected to the first section 212a, and a projection of the insulating layer 24 overlaps with a projection of the fourth section 232a.

In some embodiments, part of the third extension segment 232 extends to a side of the second side wall 114 facing away from the first side wall 113. The third extension segment 232 includes a fourth section 232a, a fifth section 232b, and a sixth section 232c connected in sequence. The fourth section 232a is connected to the third body 231. A side of the fourth section 232a is connected to the first section 212a, a side of the fifth section 232b is connected to the second section 212b, and a side of the sixth section 232c is connected to the third section 212c. The third section 212c is at least partially exposed from the sixth section 232c.

In some embodiments, part of the insulating layer 24 extends to a side of the second side wall 114 facing away from the first side wall 113. The insulating layer 24 covers at least the first section 212a and the second section 212b. At least a part of a side of the third section 212c facing away from the second extension segment 222 is exposed through the insulating layer 24.

In some embodiments, along the first direction X, the two second sealing portions 102 protrude from the bottom wall 112. The second section 212b is located between the two second sealing portions 102. The accommodation space formed by the bottom wall 112 and the portions of the two second sealing portions 102 protruding from the bottom wall 112 can reduce the space occupied by the first extension segment 212 in the first direction X.

In some embodiments, along the first direction X, a height by which the second section 212b protrudes from the bottom wall 112 is smaller than a height by which the second sealing portion 102 protrudes from the bottom wall 112, thereby further reducing the space occupied by the first extension segment 212 in the first direction X.

In some embodiments, a side of the second protective layer 16 connected to the first side wall 113 is provided with a first opening 161. The first section 212a is disposed in the first opening 161, thereby reducing the thickness space occupied by the first section 212a.

In some embodiments, along the second direction Y, a height by which the second protective layer 16 protrudes from the first side wall 113 is greater than a height by which the first section 212a protrudes from the first side wall 113, which can further reduce the thickness space occupied by the first section 212a.

In some embodiments, a side of the second protective layer 16 connected to the second side wall 114 is provided with a second opening 162. At least a part of the third section 212c is disposed in the second opening 162, thereby reducing the thickness space occupied by the third section 212c.

In some embodiments, along the second direction Y, a height by which the second protective layer 16 protrudes from the second side wall 114 is greater than a height by which the third section 212c protrudes from the second side wall 114, thereby further reducing the thickness space occupied by the third section 212c.

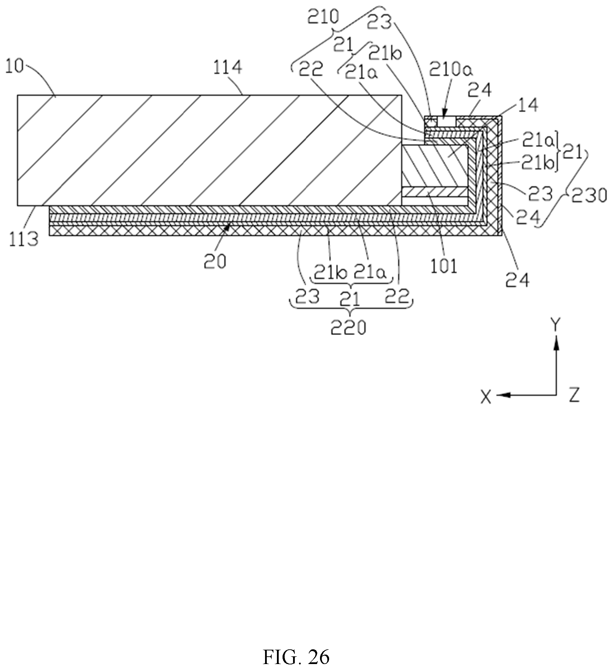

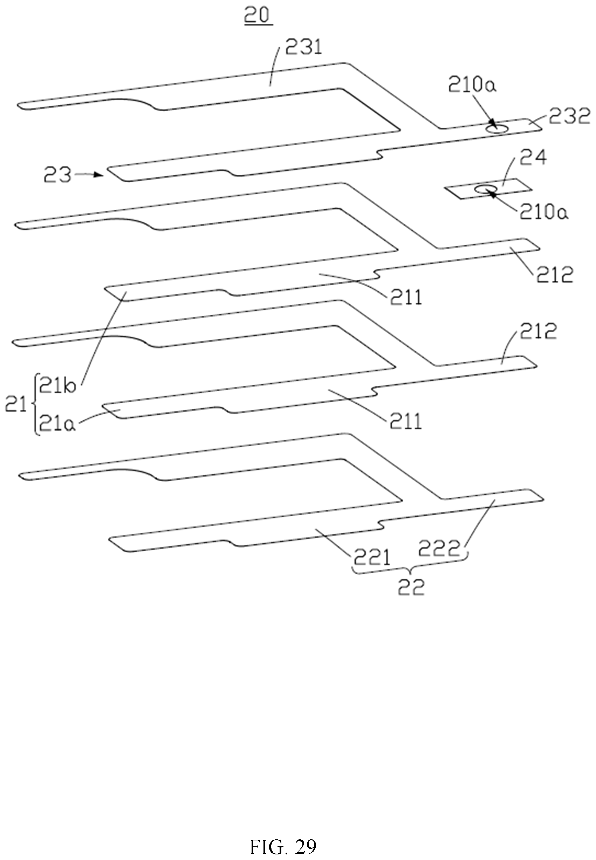

Referring to FIG. 26 to FIG. 29, a third embodiment of the present application provides a battery assembly 100. The adhesive member 20 includes a first connecting segment 210. The first connecting segment 210 extends to the second side wall 114 or a side of the first sealing portion 101 facing away from the first side wall 113. The first connecting segment 210 is provided with an exposure opening 210a. The conductive layer 21 is exposed at the exposure opening 210a. A positive electrode of an external circuit is connected to the conductive layer 21 through the exposure opening 210a, and a negative electrode is connected to the battery compartment 201, or a negative electrode of the external circuit is connected to the conductive layer 21 through the exposure opening 210a, and a positive electrode is connected to the battery compartment 201. By providing the exposure opening 210a to reveal the conductive layer 21, the manufacturing process is optimized, facilitates the lamination of the first adhesive layer 22, the conductive layer 21, and the third adhesive layer 23 into the adhesive member 20. The risk of short circuit caused by electrical connection between the conductive layer 21 and external conductive members is also reduced, and the structural strength of the first connecting segment 210 is improved. When necessary, force may be applied to the first connecting segment 210 to remove the battery 10 from the battery compartment 201.

In some embodiments, the first adhesive layer 22, the conductive layer 21, and the second adhesive layer 23, located in the first connecting segment 210, are sequentially arranged along the second direction Y. The first adhesive layer 22 is connected to the second side wall 114 or a side of the first sealing portion 101 facing away from the first side wall 113. Along the second direction Y, the exposure opening 210a extends through the second adhesive layer 23.

In some embodiments, in the first direction X and/or the third direction Z, end portions of the first adhesive layer 22, the conductive layer 21, and the second adhesive layer 23, located in the first connecting segment 210, are arranged flush with each other.

In some embodiments, in the first direction X and/or the third direction Z, a projection of the conductive layer 21 located in the first connecting segment 210 along the second direction Y is within a projection of the second adhesive layer 23 along the second direction Y.

In some embodiments, an insulating member 24 is connected to the second adhesive layer 23. The first adhesive layer 22, the conductive layer 21, the second adhesive layer 23, and the insulating member 24, located in the first connecting segment 210, are sequentially arranged along the second direction Y. Along the second direction Y, the exposure opening 210a extends through the second adhesive layer 23 and the insulating member 24. The insulating member 24 can reduce the risk of short circuit caused by contact between the conductive layer 21 and the battery compartment 201.

In some embodiments, in the first direction X and/or the third direction Z, end portions of the first adhesive layer 22, the conductive layer 21, the second adhesive layer 23, and the insulating layer 24, located in the first connecting segment 210, are arranged flush with each other, reducing the risk of short circuit caused by contact between the conductive layer 21 and the battery compartment 201.

In some embodiments, in the first direction X and/or the third direction Z, a projection of the conductive layer 21 located in the first connecting segment 210 along the second direction Y is within projections of the second adhesive layer 23 and the insulating layer 24 along the second direction Y, reducing the risk of short circuit caused by contact between the conductive layer 21 and the battery compartment 201.

In some embodiments, the insulating member 24 extends to end portions of the first adhesive layer 22, the conductive layer 21, and the second adhesive layer 23. The insulating member 24 covers the conductive layer 21, thereby facilitating reduction of the risk of short circuit caused by contact between the conductive layer 21 and the battery compartment 201.

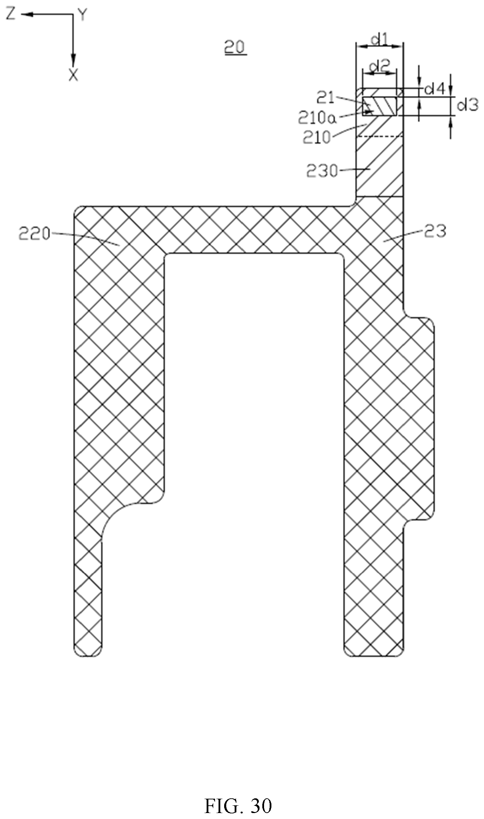

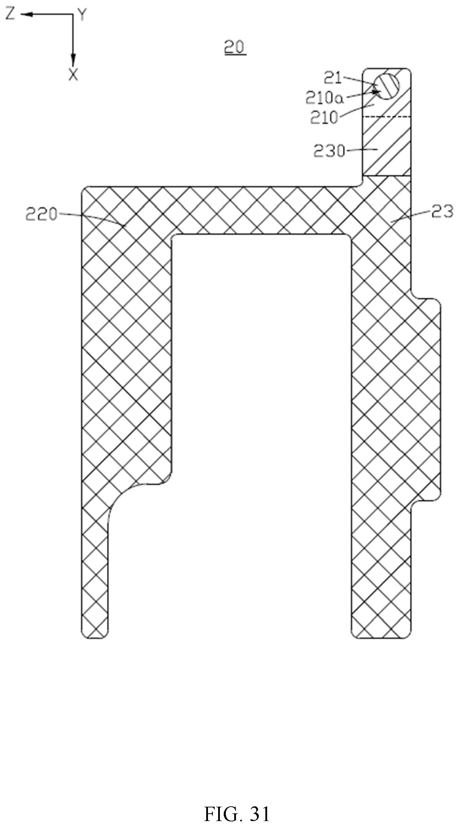

Referring to FIG. 30 and FIG. 31, in some embodiments, the exposure opening 210a may be polygonal, circular, elliptical, or the like. Optionally, the exposure opening 210a is rectangular. Optionally, the exposure opening 210a is circular. It can be understood that the shape of the exposure opening 210a is not limited to the above examples, as long as connection with an external circuit is facilitated.

Taking the exposure opening 210a being rectangular as an example, along the third direction Z, a first width d1 of the first connecting segment 210 satisfies d1 ≥ 2 mm, and a second width d2 of the exposure opening 210a satisfies d1 - d2 ≥ 1 mm.

In some embodiments, along the first direction X, a third width d3 of the exposure opening 210a satisfies d3 ≥ 2 mm.

In some embodiments, along the first direction X, a minimum distance d4 between the exposure opening 210a and an edge of the first connecting segment 210 satisfies d4 ≥ 0.5 mm.

Referring to FIG. 26 to FIG. 29, in some embodiments, the adhesive member 20 includes a second connecting segment 220. Along the second direction Y, the battery 10 is located between the second connecting segment 220 and the first connecting segment 210. Along the second direction Y, the second adhesive layer 23, the conductive layer 21, and the first adhesive layer 22, located in the second connecting segment 220, are sequentially arranged. The first adhesive layer 22 located in the second connecting segment 220 is connected to the first side wall 113. The second adhesive layer 23 located in the second connecting segment 220 is connected to the battery compartment 201.

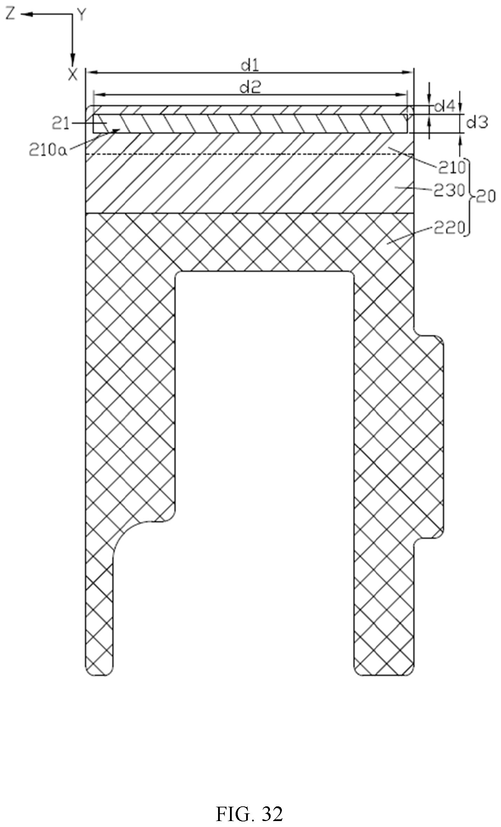

Referring to FIG. 32, in some embodiments, a width of the first connecting segment 210 is substantially the same as a width of the second connecting segment 220. For example, a difference between the width of the first connecting segment 210 and the width of the second connecting segment 220 is less than 0.1 mm.

Referring to FIG. 26 to FIG. 29, in some embodiments, the adhesive member 20 includes a third connecting segment 230. The third connecting segment 230 is connected to the first connecting segment 210 and the second connecting segment 220. Along the first direction X, the second adhesive layer 23, the conductive layer 21, and the first adhesive layer 22, located in the third connecting segment 230, are sequentially arranged.

In some embodiments, along the first direction X, the insulating member 24 is connected to the second adhesive layer 23 located in the third connecting segment 230, and the insulating member 24 is located between the second adhesive layer 23 and the battery compartment 201.

In some embodiments, the third connecting segment 230 is connected to the bottom wall 112 and is located between the bottom wall 112 and the battery compartment 201.

In some embodiments, the third connecting segment 230 is connected to the third side wall 115 and is located between the third side wall 115 and the battery compartment 201.

In some embodiments, the third connecting segment 230 is connected to the fourth side wall 116 and is located between the fourth side wall 116 and the battery compartment 201.

In some embodiments, the third connecting segment 230 is located between the protection board 14 and the battery compartment 201.

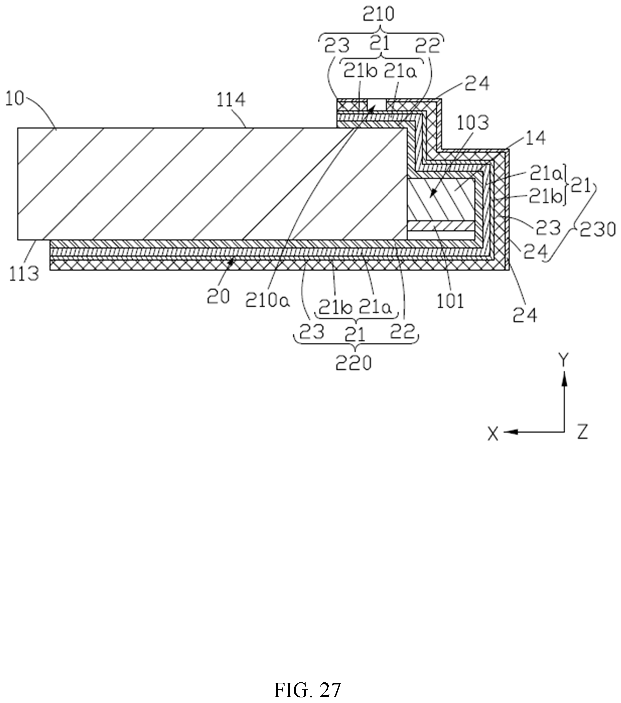

Referring to FIG. 27, in some embodiments, the first body 211 is connected to the second body 221 and the third body 231 to form the second connecting segment 220.

In some embodiments, the first extension segment 212 is connected to the second extension segment 222 and the third extension segment 232 to form the first connecting segment 210 and the third connecting segment 230.

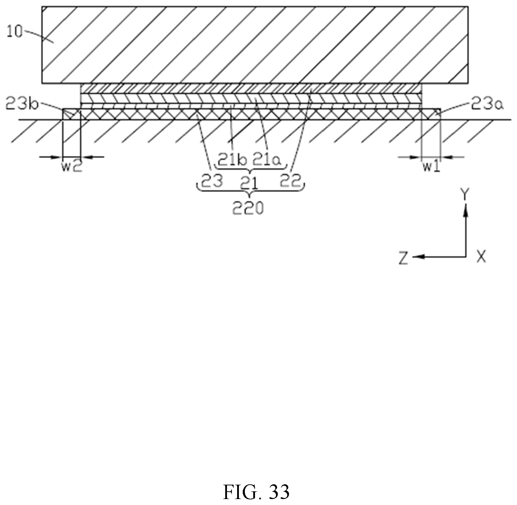

Referring to FIG. 33, in some embodiments, in the third direction Z and/or the first direction X, a projection of the conductive layer 21 along the second direction Y is within a projection of the second adhesive layer 23 along the second direction Y, reducing the risk of short circuit caused by contact between the conductive layer 21 and the battery compartment 201.

In some embodiments, along the third direction Z, the second adhesive layer 23 includes a first edge 23a and a second edge 23b. Along the second direction Y, a projection of the conductive layer 21 is located between a projection of the first edge 23a and a projection of the second edge 23b.

In some embodiments, along the third direction Z, a minimum distance w1 between the first edge 23a and an edge of the conductive layer 21 satisfies 0 ≤ w1 ≤ 3 mm, thereby facilitating reduction of the risk of short circuit caused by contact between the conductive layer 21 and the battery compartment 201. Optionally, w1 may be any one of 0 mm, 0.5 mm, 1 mm, 1.5 mm, 2 mm, 2.5 mm, or 3 mm, or a range defined by any two thereof.

In some embodiments, along the third direction Z, a minimum distance w2 between the second edge 23b and an edge of the conductive layer 21 satisfies 0 ≤ w2 ≤ 3 mm, thereby facilitating reduction of the risk of short circuit caused by contact between the conductive layer 21 and the battery compartment 201. Optionally, w2 may be any one of 0 mm, 0.5 mm, 1 mm, 1.5 mm, 2 mm, 2.5 mm, or 3 mm, or a range defined by any two thereof.

Referring to FIG. 26, in some embodiments, the first sealing portion 101, the protection board 14, and the first connecting segment 210 are arranged along the second direction Y. The protection board 14 is located on a side of the first sealing portion 101 facing away from the first side wall 113. The first connecting segment 210 is connected to a side of the protection board 14 facing away from the first sealing portion 101. When viewed along the first direction X, along the second direction Y, the first connecting segment 210 does not extend beyond the packaging bag 11, thereby facilitating reduction of the space occupied by the adhesive member 20 in the thickness direction of the battery 10 and improving space utilization.

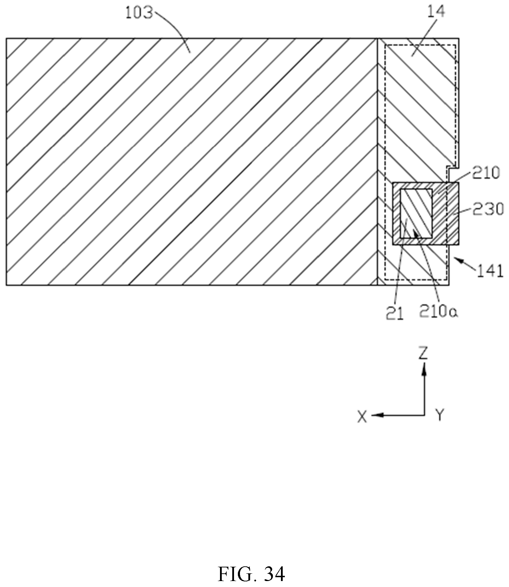

Referring to FIG. 34, in some embodiments, the protection board 14 is located on a side of the first sealing portion 101 facing away from the first side wall 113. The first connecting segment 210 is connected to a side of the protection board 14 facing away from the first sealing portion 101. The protection board 14 is provided with a notch portion 141. Part of the adhesive member 20 is disposed in the notch portion 141. When viewed along the second direction Y and along the first direction X, the adhesive member 20 does not extend beyond the protection board 14, thereby facilitating reduction of the space occupied by the adhesive member 20 along the first direction X and improving space utilization. Optionally, part of the third connecting segment 230 is disposed in the notch portion 141.

In some embodiments, a thickness of the adhesive member 20 is smaller than a depth of the notch portion 141 along the first direction X, reducing the space occupied by the adhesive member 20 along the first direction X.

Referring to FIG. 27, in some embodiments, when the width of the first connecting segment 210 is substantially the same as the width of the second connecting segment 220, the first connecting segment 210 is connected to the second side wall 114, the second connecting segment 220 is connected to the first side wall 113, the adhesive member 20 and the battery 10 form an accommodation space 103, the protection board 14 is disposed in the accommodation space 103, and the adhesive member 20 covers the protection board 14 and the first sealing portion 101, providing insulation protection for the protection board 14 and the first sealing portion 101.

In some embodiments, along the first direction X, the protection board 14 is located between the top wall 111 and the third connecting segment 230. Along the second direction Y, the protection board 14 is located between the second connecting segment 220 and the first connecting segment 210.

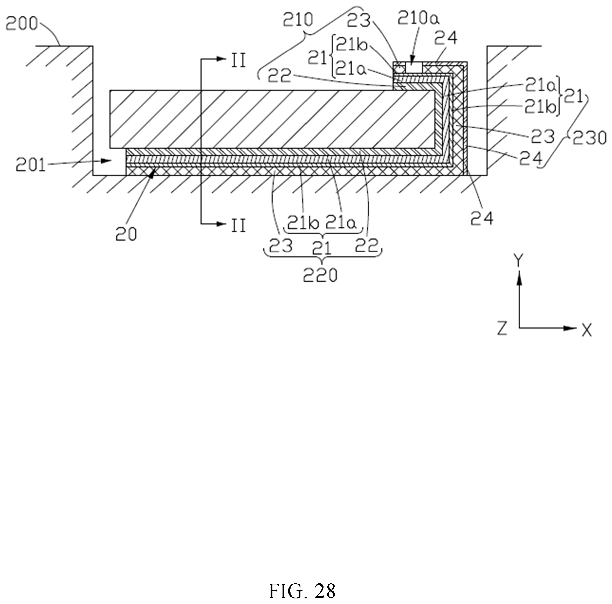

Referring to FIG. 28, in some embodiments, the third connecting segment 230 is connected to the bottom wall 112. The first connecting segment 210 is connected to the third connecting segment 230 and extends to the second side wall 114.

In some embodiments, the third connecting segment 230 is connected to the third side wall 115 or the fourth side wall 116. The first connecting segment 210 is connected to the third connecting segment 230 and extends to the second side wall 114.

In some embodiments, the battery assembly 100 includes an insulating adhesive. The insulating adhesive is applied on an end face of the first connecting segment 210 facing away from the third connecting segment 230 and covers at least the conductive layer 21 exposed at the end face, thereby facilitating reduction of the risk of short circuit caused by contact of the conductive layer 21 with the battery compartment 201 or other components.

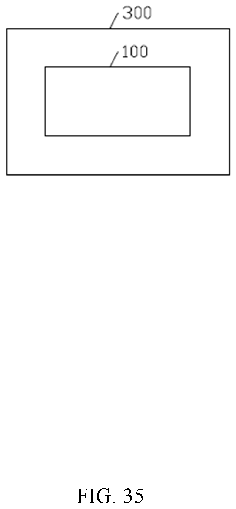

Referring to FIG. 35, the present application further provides an electric device 300 using the above battery assembly 100. The electric device 300 includes a battery compartment 201. The second adhesive layer 23 is connected to the battery compartment 201, and the second adhesive layer 23 is configured such that an adhesiveness of the second adhesive layer is reduced or lost when a current is conducted between the conductive layer 21 and the battery compartment 201. In one embodiment, the electric device 300 of the present application may be, but is not limited to, various types of electronic devices.

Those of ordinary skill in the art should be aware of that the above embodiments are only intended to describe the present application, but not to limit the present application. Appropriate modifications and variations made to the above embodiments without departing from the essential spirit and scope of the present application all fall within the scope disclosed in the present application.

## Claims

1. A battery assembly, comprising a battery and an adhesive member, wherein the adhesive member is configured to adhere the battery to an external battery compartment; the battery comprises a packaging bag and an electrode tab; the packaging bag comprises a top wall, a bottom wall, a first side wall, and a second side wall; the top wall and the bottom wall are arranged along a first direction; the first side wall and the second side wall are arranged along a second direction; the first side wall is connected to the top wall and the bottom wall; the second side wall is connected to the top wall and the bottom wall; the packaging bag comprises a first sealing portion; the first sealing portion is connected to the top wall, and the electrode tab extends out from the first sealing portion; and the first direction is perpendicular to the second direction, and the second direction is a thickness direction of the battery; wherein the adhesive member comprises:
a first adhesive layer connected to the first side wall,
a second adhesive layer configured to be connected to the external battery compartment, and
a conductive layer, wherein one side of the conductive layer is connected to the first adhesive layer and at least a part of another side of the conductive layer is connected to the second adhesive layer;
wherein the conductive layer comprises a first body and a first extension segment connected to the first body, the first body is connected to the first side wall, and the first extension segment extends to the second side wall or a side of the first sealing portion facing away from the first side wall; and
the second adhesive layer is configured such that an adhesiveness of the second adhesive layer is reduced or lost when a current is conducted between the conductive layer and the external battery compartment.

2. The battery assembly according to claim 1, wherein along the second direction, a projection of the first body is within a projection range of the first side wall; the first extension segment comprises a first section, a second section, and a third section connected in sequence; the first section is connected to the first body; the first section is located on a side of the first sealing portion toward the first side wall; the second section is located on a side of the first sealing portion facing away from the top wall; the third section is located on a side of the first sealing portion facing away from the first side wall, and at least a part of the third section is exposed from the battery; and along the first direction, projections of the first section, the second section, and the third section are all located within a projection range of the top wall.

3. The battery assembly according to claim 2, wherein the first adhesive layer comprises a second body and a second extension segment connected to the second body; one side of the second body is connected to the first body, and another side of the second body is connected to the first side wall; one side of the second extension segment is connected to the first extension segment, and another side of the second extension segment is connected to the first sealing portion; and along the second direction, a projection of the first body, a projection of the second body, and a projection of the second adhesive layer are all located within a projection range of the first side wall.

4. The battery assembly according to claim 3, wherein the adhesive member further comprises an insulating layer, and the insulating layer covers a side of the first section facing away from the second extension segment and a side of the second section facing away from the second extension segment; at least a part of a side of the third section facing away from the second extension segment is exposed through the insulating layer; and along the second direction, a projection of the insulating layer overlaps with a projection of the second adhesive layer.

5. The battery assembly according to claim 4, wherein along the second direction, a width L1 of an overlapping region between the insulating layer and the second adhesive layer satisfies 0 < L1 < 2 mm.

6. The battery assembly according to claim 4, wherein the second adhesive layer comprises a third body; one side of the third body is connected to the first body and another side of the third body is configured to be connected to the battery compartment; along the second direction, a projection of the first body, a projection of the second body ,and a projection of the third body are all located within a projection range of the first side wall; and a projection of the insulating layer overlaps with a projection of the third body.

7. The battery assembly according to claim 4, wherein the second adhesive layer comprises a third body and a third extension segment; one side of the third body is connected to the first body, and another side of the third body is configured to be connected to the battery compartment; along the second direction, a projection of the first body, a projection of the second body, and a projection of the third body are all located within a projection range of the first side wall; the third extension segment comprises a fourth section, a fifth section, and a sixth section connected in sequence; the fourth section is connected to the third body; a side of the fourth section is connected to the first section, a side of the fifth section is connected to the second section, and a side of the sixth section is connected to the third section; at least a part of the third section is exposed through the sixth section; and the insulating layer covers a side of the fourth section facing away from the first extension segment, a side of the fifth section facing away from the first extension segment, and a side of the sixth section facing away from the first extension segment.

8. The battery assembly according to claim 4, wherein the battery further comprises a first protective layer; the first protective layer is connected to the first side wall, the first sealing portion, and the second side wall; the electrode tab and at least a part of the first sealing portion are located within the first protective layer; the first adhesive layer is connected to the first protective layer; and along the second direction, a projection of the insulating layer on the first side wall is separated from a projection of the first protective layer on the first side wall.

9. The battery assembly according to claim 4, wherein the battery comprises an electrode assembly and an adapter, both disposed in the packaging bag, and the adapter is connected to the electrode assembly and the electrode tab; and along the second direction, a projection of the insulating layer is separated from a projection of the adapter.

10. The battery assembly according to claim 1, wherein the conductive layer comprises a substrate layer and a conductive sublayer the substrate layer is connected to the first adhesive layer, and the conductive sublayer is connected to a side of the substrate layer facing away from the first adhesive layer.

11. The battery assembly according to claim 1, wherein the battery assembly comprises two adhesive members; when viewed along the second direction, the two adhesive members are spaced apart in a third direction; and the first direction, the second direction, and the third direction are mutually perpendicular.

12. The battery assembly according to claim 1, wherein the adhesive member comprises a first connecting segment, and the first connecting segment extends to the second side wall or a side of the first sealing portion facing away from the first side wall; the first connecting segment is provided with an exposure opening; and the conductive layer is exposed at the exposure opening.

13. The battery assembly according to claim 12, wherein the adhesive member comprises an insulating layer; along the second direction, the first adhesive layer, the conductive layer, the second adhesive layer, and the insulating layer located in the first connecting segment are sequentially stacked; the first adhesive layer located in the first connecting segment is connected to the second side wall or a side of the first sealing portion facing away from the first side wall; and the exposure opening extends through the second adhesive layer and the insulating layer along the second direction.

14. The battery assembly according to claim 13, wherein in the first direction, a projection of the conductive layer located in the first connecting segment along the second direction is within projections of the second adhesive layer and the insulating layer along the second direction, or end portions of the first adhesive layer, the conductive layer, the second adhesive layer, and the insulating layer located in the first connecting segment are arranged flush with each other.

15. The battery assembly according to claim 13, wherein the adhesive member comprises a second connecting segment; along the second direction, the battery is located between the second connecting segment and the first connecting segment; and along the second direction, the second adhesive layer, the conductive layer, and the first adhesive layer located in the second connecting segment are sequentially stacked, and the first adhesive layer located in the second connecting segment is connected to the first side wall.

16. The battery assembly according to claim 12, wherein in the first direction and/or the third direction, a projection of the conductive layer along the second direction is within a projection of the second adhesive layer along the second direction, and the first direction, the second direction, and the third direction are mutually perpendicular.

17. The battery assembly according to claim 15, wherein the battery further comprises a protection board; the protection board is disposed on the top wall and is connected to the electrode tab; the adhesive member covers the protection board and the first sealing portion; the first connecting segment is connected to the second side wall; and the second connecting segment is connected to the first side wall.

18. The battery assembly according to claim 12, wherein the battery further comprises a protection board; the protection board is disposed on the top wall and is connected to the electrode tab; the first sealing portion extends along the first direction; and along the second direction, the protection board is located on a side of the first sealing portion facing away from the first side wall, and the first connecting segment extends to a side of the protection board facing away from the first sealing portion.

19. An electric device, comprising the battery assembly according to any one of claims 1 to 18, wherein the electric device comprises a battery compartment, the second adhesive layer is connected to the battery compartment, and the second adhesive layer is configured such that an adhesiveness of the second adhesive layer is reduced or lost when current is conducted between the conductive layer and the battery compartment.
